# EUROPÄISCHE PATENTSCHRIFT

(11) **EP 3 571 429 B1**
(45) Veröffentlichungstag und Bekanntmachung des Hinweises auf die Patenterteilung: **06.03.2024**
(21) Anmeldenummer: 18701700.9
(22) Anmeldetag: 18.01.2018
(51) Int. Cl.: F16K 1/42, F16K 31/06, F16K 1/44

(54) **ELEKTROMAGNETISCHES VENTIL**
ELECTROMAGNETIC VALVE
VANNE ÉLECTROMAGNÉTIQUE

(30) Priorität: 19.01.2017 DE 102017000445; 29.08.2017 EP 17001447
(43) Veröffentlichungstag der Anmeldung: 27.11.2019
(73) Patentinhaber: Andreas Stihl AG & Co. KG, 71336 Waiblingen (DE); Staiger GmbH & Co. KG, 74391 Erligheim (DE)
(72) Erfinder: RAMLER, Jens, Peter, 71522 Backnang (DE); LEVIEN, Patrick, 73061 Ebersbach (DE); SCHLAUCH, Patrick, 73730 Esslingen (DE); KOFINK, Peter, 74182 Obersulm (DE); LAYHER, Wolfgang, 74354 Besigheim (DE); STAIGER, Bruno, 74357 Bönnigheim (DE); WALDINSPERGER, Stefan, 74392 Freudental (DE); STAIGER, Marc, 71634 Ludwigsburg (DE); WIEDUWILT, Marcus, 75417 Mühlacker- Grossglattbach (DE)
(74) Vertreter: Wasmuth, Rolf
(86) Internationale Anmeldenummer: PCT/EP2018/051215
(87) Internationale Veröffentlichungsnummer: WO 2018/134306

(56) Entgegenhaltungen:
- EP-A1- 0 919 755
- DE-A1- 2 160 262
- DE-A1-102014 208 397
- DE-A1-102015 212 476
- DE-B3-102007 005 915
- DE-B4- 10 242 816
- US-A- 3 960 361

## Beschreibung

Die Erfindung betrifft ein elektromagnetisches Ventil mit einem Ventilgehäuse, mit mindestens einer Ventilöffnung mit einem Ventilsitz, sowie mit einem Magnetkreis mit einer elektrischen Antriebsspule und einem magnetischen Joch mit einer Längsmittelachse, und mit einem mit dem Joch zusammenwirkenden metallischen Plattenanker mit einer Ankerscheibe. Die Ankerscheibe ist gegenüber dem Joch beweglich gelagert, wobei die Ankerscheibe in einer ersten Schaltstellung des Ventils mit einer Dichtfläche an dem Ventilsitz dichtend anliegt und in einer zweiten Schaltstellung den Ventilsitz freigibt.

Bei bewährten Ventilen dieser Art sind wesentliche Teile wie Gehäuse, Ventilkörper und Ventilsitz aus Kunststoff hergestellt. Dabei ist es nicht auszuschließen, dass insbesondere bei extremen Umgebungsverhältnissen und hoher Ventilschalthäufigkeit zum Beispiel Abnutzungen und/oder Verformungen im Bereich des Ventilsitzes auftreten, die zu Funktionsbeeinträchtigungen führen können.

Aus der DE 102 42 816 B4 ist ein elektromagnetisches Ventil bekannt. Das Ventil besitzt eine Spule, in der ein Eisenkern eines magnetischen Joches angeordnet ist. Das Joch und die Spule sind von einem Kunststoffgehäuse ummantelt. Bei Stromfluss in der Spule wird ein Plattenanker entgegen einer Federkraft in Richtung des Jochs angezogen. Der Plattenanker kontaktiert dabei eine Anlagefläche, die an dem Kunststoffgehäuse ausgebildet ist und schaltet Ventilsitze von durch das Kunststoffgehäuse verlaufenden Strömungskanälen. In Abhängigkeit des geschalteten Fluids neigen die im Kunststoffgehäuse ausgebildeten Ventilsitze zum Verschleiß. Dieser kann durch mineralische Partikel im Fluid auftreten, die abrasiv wirken. Auch können sich die Partikel in den Ventilsitzen des Kunststoffgehäuses einlagern, wodurch es zur Leckage des elektromagnetischen Ventils kommen kann.

Die DE 10 2007 005 915 B3 zeigt ein vergleichbares Ventil, bei dem der Plattenanker mindestens eine Dichtscheibe vorgegebener Dicke trägt, die mit einer Ventilöffnung zusammenwirkt. Mineralische Partikel im geschalteten Fluid können sich in das Dichtelement einarbeiten und zur Leckage des elektromagnetischen Ventils führen.

Aus der US 3,960,361 A ist ein elektromagnetisches Ventil mit einem mit dem Joch zusammenwirkenden metallischen Plattenanker bekannt, der als Ankerscheibe ausgebildet und gegenüber dem Joch beweglich gelagert ist. Die Ankerscheibe wirkt mit einem im Ventilgehäuse eingesetzten Ventilbauteil mit einem Ventilsitz zusammen. Das Ventilbauteil weist eine zentrale Ventilöffnung auf, wobei sowohl die Dichtfläche der Ankerscheibe aus Metall als auch der zur Ankerscheibe des Plattenankers korrespondierende Ventilsitz der Ventilöffnung aus Metall besteht. Das Ventilbauteil liegt leicht außermittig zur Längsmittelachse des Ventilgehäuses, was zu Kippkräften auf die Ankerscheibe führt.

Der Erfindung liegt die Aufgabe zugrunde, ein Ventil der eingangs beschriebenen Art dahingehend weiterzubilden, dass die vorbeschriebenen Nachteile vermieden und mit einfachen Mitteln eine hohe Ventilsitzstandfestigkeit sowie eine dauerhaft zuverlässige Funktionstüchtigkeit erzielt werden.

Diese Aufgabe wird erfindungsgemäß dadurch gelöst, dass das Ventilbauteil im Wesentlichen kreisscheibenförmig als Ringelement ausgebildet ist und eine konzentrisch zur Längsmittelachse ausgebildete zentrale Öffnung aufweist und mindestens eine von einem Ventilsitz umgebene Ventilöffnung enthält. An der einem Bodenabschnitt abgewandten Seite des Jochs ist das Ventilbauteil angeordnet ist, wobei eine erste Stirnseite des Ringelements dem Joch zugewandt liegt.

Die Ventilöffnung mit dem Ventilsitz ist in dem Ringelement ausgebildet. Das Ringelement kann eine mit dem Joch zumindest teilweise in Kontakt stehende erste Stirnseite besitzen.

Der Ventilsitz ist an dem Ringelement mit mindestens einer Ventilöffnung ausgebildet, wobei die Ventilöffnung mit einem radialen Abstand zur Längsmittelachse liegt. Der Abstand wird von der Längsmittelachse zum Zentrum, insbesondere zur Mitte der Öffnung der Ventilöffnung gemessen. Durch die Ausbildung des Ventilsitzes aus Metall ist gewährleistet, dass dieser besonders widerstandsfähig gegen Verschleiß ist. Eine Einlagerung von Partikeln in den Ventilsitz kann verhindert werden. Auch ein langfristiger Verschleiß durch abrasive Partikel kann vermieden werden. Aufgrund des metallischen Kontaktes der Dichtfläche der Ankerscheibe mit dem metallischen Ventilsitz wird ferner gewährleistet, dass sich aus dem Fluid anlagernde Partikel verdrängt werden, wodurch die Dichtigkeit des Ventils für eine lange Betriebsdauer erzielt ist.

Das Ringelement ist derart am Ventilgehäuse angeordnet, dass es an Bereichen mit erhöhter Erosionsbelastung mit dem Fluid in Kontakt steht. Demnach ist das Ringelement in Bereichen des elektromagnetischen Ventils angeordnet, in denen erhöhter Verschleiß auftritt. Durch die gezielte Wahl des Werkstoffes des Ringelementes, insbesondere die gezielte Wahl der Werkstoffpaarung aus dem Ringelement und dem metallischen Plattenanker, kann das elektromagnetische Ventil spezifisch auf ein zu schaltendes Fluid angepasst werden. Da lediglich der Werkstoff des Ringelementes bei der Herstellung des elektromagnetischen Ventils anzupassen ist, kann der Werkstoff des Ventilgehäuses beibehalten werden. Dadurch kann auf einfache Weise an Bereichen mit erhöhter Erosionsbelastung der Verschleiß reduziert werden, ohne dabei die Strömungseigenschaften zu beeinflussen. Insbesondere kann auch eine Verbesserung der Strömungseigenschaften des Fluids erzielt werden.

Da der Ventilsitz des Ringelementes aus Metall und die Dichtfläche des Plattenankers aus Metall und/oder einer Metalllegierung besteht, reduziert sich der Verschleiß des Ventilsitzes und der anzulegenden Dichtfläche gegenüber einer Ausbildung aus Kunststoff erheblich. Dadurch erhöht sich die Lebenszeit des elektromagnetischen Ventils. Außerdem kann eine gute Dichtwirkung zwischen dem Ventilsitz an dem Ringelement und der Dichtfläche des metallischen Plattenankers über eine lange Betriebsdauer des elektromagnetischen Ventils erzielt werden. Vorteilhaft gleicht sich der Ventilsitz der Dichtfläche des metallischen Plattenankers an. Dadurch kann sich die Dichtwirkung des elektromagnetischen Ventils nach längerer Betriebsdauer auch erhöhen.

Es ist vorteilhaft vorgesehen, dass das Ringelement mindestens teilweise, insbesondere vollständig, aus einem Metall und/oder einer Metalllegierung besteht. Das Metall des Ventilbauteils kann insbesondere magnetisch sein.

Vorteilhaft ist der Ventilsitz als am Ringelement ausgebildeter erhöhter Rand der Ventilöffnung ausgebildet. Der erhöhte Rand kann nach Art eines Absatzes oder Podestes ausgebildet sein. Der Rand umgibt die Ventilöffnung vollständig. Dadurch können bessere Dichteigenschaften zwischen der Dichtfläche des Ventilsitzes und dem metallischen Plattenanker erreicht werden. Durch die Ausbildung des Ventilsitzes als erhöhter Rand steht die Dichtebene des Ventilsitzes gegenüber der restlichen Fläche der Stirnseite des Ringelementes zum Plattenanker hin vor. Vorteilhaft liegt die Dichtebene des Ventilsitzes von der restlichen Fläche des Ringelementes beabstandet. Liegt der Plattenanker an dem erhöhten Rand des Ventilsitzes an, steht die übrige Fläche der Stirnseite des Plattenankers mit dem Ventilbauteil nicht in Kontakt. Dadurch entsteht ein Restluftspalt zwischen dem Ventilbauteil und dem metallischen Plattenanker. Da kein flächiger Kontakt zwischen dem metallischen Plattenanker und der restlichen Fläche des Ventilbauteils entsteht, können auch größere Adhäsionskräfte vermieden werden. Große Adhäsionskräfte würden ein Lösen des Plattenankers von dem Ventilbauteil behindern und die Funktionssicherheit des Ventils beeinträchtigen.

Der Flächeninhalt des Ventilsitzes ist gegenüber dem Flächeninhalt der zweiten Stirnseite gering. Der Flächeninhalt des Ventilsitzes beträgt weniger als 10% des Flächeninhalts der zweiten Stirnseite. Durch den geringen Flächeninhalt des Ventilsitzes ist die Flächenpressung bei Kontakt zwischen dem Ventilsitz und dem Plattenanker hoch, wodurch eine gute Abdichtung möglich ist.

In einer weiteren Ausführungsform der Erfindung ist das Ventilbauteil als Rahmenelement ausgebildet. Das Rahmenelement besteht vorteilhaft aus einem insbesondere zentralen Kreisring. Das Rahmenelement weist mindestens eine die Ventilöffnung einfassende Metallbrille auf. Die einfassende Metallbrille bildet vorteilhaft den Ventilsitz. Durch die Ausbildung einer Metallbrille ist der Materialaufwand reduziert, so dass beispielsweise das aus Metall oder einer Metalllegierung bestehende Rahmenelement nur geringen Einfluss auf das magnetische Feld der Antriebseinheit des Ventils hat.

Das magnetische Joch der Antriebseinheit des Ventils weist vorteilhaft einen Außenzylinder mit einem Innenkern auf. Eine Zylinderwand des Außenzylinders weist einen inneren Durchmesserkreis auf. Die Ventilöffnung liegt vorteilhaft auf dem inneren Durchmesserkreis . Eine derartige Anordnung ist zur Ausbildung der Strömungsverbindung zur Ventilöffnung vorteilhaft.

Vorteilhaft ist das Ventilbauteil bzw. das Ringelement am Joch formschlüssig angebunden. Dadurch kann das Magnetfeld zwischen dem Joch und dem Ventilbauteil begünstigt werden. Durch ein störungsfreies Magnetfeld können die Anziehungskräfte zwischen dem Ringelement und dem metallischen Plattenanker verstärkt werden. Dies kann zu einer geringeren Baugröße der Bauteile und damit zu einem kleiner bauenden Ventil führen. Durch die formschlüssige Verbindung zwischen dem Ventilbauteil oder dem Ringelement und dem Joch ist das Ventilbauteil auch bei hoher Belastung sicher gehalten.

Das magnetische Joch der Antriebseinheit des Ventils besteht aus einem Außenkern und einem Innenkern. Vorteilhaft ist der Außenkern als Außenzylinder ausgebildet. Der Innenkern hat vorzugsweise die Gestalt eines Vollzylinders. Der Innenkern ist zweckmäßig von dem Außenzylinder umgeben. Das Ventilbauteil ist vorteilhaft in dem Ringraum zwischen dem Innenkern und der Zylinderwand des Außenzylinders angeordnet. Insbesondere greift das Ventilbauteil vorzugsweise mit einem insbesondere radialen Befestigungsabschnitt in zumindest eine Aussparung der Zylinderwand des Außenzylinders ein. Das Ventilbauteil ist vorteilhaft formschlüssig drehfest in der Aussparung der Zylinderwand des Außenzylinders gehalten. Für eine gute Zugänglichkeit auf die Ventilöffnung ist vorgesehen, dass die Ventilöffnung örtlich in der Aussparung der Zylinderwand des Außenzylinders liegt.

Vorteilhaft wird das insbesondere als Ringelement oder Rahmenteil ausgebildete Ventilbauteil an dem Ventilgehäuse gehalten. Das Ventilbauteil kann insbesondere als Einsatzteil ausgebildet sein, wobei das Einsatzteil in das Material des Ventilgehäuses eingegossen, vorteilhaft eingespritzt ist. Dadurch werden zusätzliche Bauteile zur Befestigung des Ringelementes vermieden, wodurch die Herstellung des elektromagnetischen Ventils vereinfacht und eine Reduzierung des Bauraums erzielt ist. Vorteilhaft kann das Ventilbauteil auch an das Joch geklebt oder geschweißt werden. Zweckmäßig wird das Ventilbauteil formschlüssig dicht in einem Kunststoff eingebettet. Der Kunststoff kann derselbe sein, aus dem auch das Ventilgehäuse besteht. Der Kunststoff füllt insbesondere den freien Ringraum zwischen dem Innenkern und dem Außenzylinder.

Die erste Schaltstellung des elektromagnetischen Ventils kann die Schaltstellung sein, in der die elektrische Antriebsspule nicht bestromt ist. Bei dem elektromagnetischen Ventil handelt es sich zweckmäßig um ein stromlos offenes Ventil. Die erste Stellung bei einem stromlos offenen Ventil bedeutet, dass der Ventilsitz des Ventilbauteils nicht dichtend mit der Dichtfläche des metallischen Plattenankers zusammenwirkt. Demnach besteht in der ersten Schaltstellung bei einem stromlos offenen Ventil eine fluidische Verbindung zwischen dem mindestens einen ersten Strömungskanal mit der Ventilöffnung und dem mindestens einen zweiten Strömungskanal mit dem Ausgang. Das Fluid kann in der ersten Schaltstellung von dem ersten Strömungskanal durch das Ventilgehäuse und durch das Ringelement über den Ventilraum in den zweiten Strömungskanal fließen. Um einen höheren Strömungsquerschnitt zu erreichen, sind vorteilhaft mehrere erste Strömungskanäle und Ventilöffnungen und/oder mehrere zweite Strömungskanäle vorgesehen, die über den Ventilraum miteinander fluidisch verbunden sind. Insbesondere weist das Ventilbauteil mehr als eine Ventilöffnung und mehr als einen Ventilsitz auf. Die Ventilsitze liegen bevorzugt in Umfangsrichtung um die Längsmittelachse mit Abstand zueinander. Insbesondere sind die mehreren Ventilsitze in einer gemeinsamen Ebene angeordnet.

In einer zweiten Schaltstellung des elektromagnetischen Ventils ist die elektrische Antriebsspule bestromt. Dadurch wirkt ein Magnetfeld, welches den metallischen Plattenanker in Richtung des Ventilbauteils zieht. Die Dichtfläche des metallischen Plattenankers wirkt mit dem Ventilsitz dichtend zusammen. Der metallische Plattenanker sperrt die fluidische Verbindung der Ventilöffnung des ersten Strömungskanals und des zweiten Strömungskanals zum Ausgang des Ventils. In der zweiten Schaltstellung des elektromagnetischen Ventils ist eine Förderung des Fluids unterbunden bzw. gesperrt.

Das Ventilbauteil mit dem Ventilsitz besteht insbesondere aus einem magnetisierbaren Metall. Dadurch wird das Ventilbauteil Teil des magnetischen Kreises des Jochs, wodurch magnetische Verluste minimiert werden können.

Es kann zweckmäßig sein, das Ventilbauteil aus einem nichtmagnetischen Metall, insbesondere aus einem Edelstahl auszubilden. Das Ventilbauteil wird in diesem Fall kein Teil des magnetischen Kreises, was im Einzelfall vorteilhaft sein kann.

In besonderer Ausbildung der Erfindung ist das Ventilbauteil mit dem Ventilsitz als im Stanz-/Biegeverfahren hergestellte Baueinheit ausgebildet. Bei diesem Fertigungsverfahren kann insbesondere der den Ventilsitz bildende Rand in einfacher Weise angeformt werden.

Zweckmäßig weist das Ventilbauteil eine zentrale Öffnung auf, wobei im Ventilgehäuse zwischen einer Begrenzungswand der Öffnung und einer Umfangsfläche eines Innenkerns des Jochs ein Abstand besteht. Der Abstand wird zweckmäßig mit einem nicht magnetisierbaren Werkstoff gefüllt, so dass ein magnetischer Kurzschluss sicher verhindert ist.

In besonderer Weise sind die Ventilöffnung und der Ventilsitz rechteckförmig mit gerundeten Eckbereichen ausgebildet. So kann in einem Ringelement eine große Ventilöffnung bereitgestellt werden, wodurch der Durchfluss eines Fluids begünstigt ist.

Es ist vorteilhaft vorgesehen, den Plattenanker in Richtung einer Schaltstellung mit der Federkraft einer Ventilfeder zu beaufschlagen. Diese Schaltstellung kann die erste Schaltstellung sein. Vorteilhaft wirkt auf den Plattenanker eine Feder, die den Plattenanker nach Deaktivierung des Stromflusses in der elektrischen Antriebsspule in die erste Schaltstellung zurückdrängt. Dadurch werden kurze Schaltzeiten des elektromagnetischen Ventils möglich.

Weitere Vorteile und wesentliche Einzelheiten der Erfindung sind den weiteren Ansprüchen, den Zeichnungen und der nachfolgenden Beschreibung von Ausführungsbeispielen der Erfindung zu entnehmen. Es zeigen:
- Fig. 1: eine perspektivische Darstellung eines elektromagnetischen Ventils ohne Ventilgehäuse und metallischem Plattenanker,
- Fig. 2: eine perspektivische Darstellung des elektromagnetischen Ventils nach Fig. 1 mit separatem, als Ringelement ausgebildetem Ventilbauteil,
- Fig. 3: eine Ansicht auf das elektromagnetische Ventil mit Ventilgehäuse von unten ohne Plattenanker,
- Fig. 4: eine Schnittdarstellung entlang der Linie III-III in Fig. 3 des elektromagnetischen Ventils,
- Fig. 5: eine Schnittdarstellung entlang der Linie III-III in Fig. 3 eines elektromagnetischen Ventils mit Ventilgehäuse in einer ersten Schaltstellung,
- Fig. 6: eine Schnittdarstellung entlang der Linie III-III in Fig. 3 des elektromagnetischen Ventils mit Ventilgehäuse in einer zweiten Schaltstellung,
- Fig. 7: eine weitere Schnittdarstellung durch das elektromagnetische Ventil nach der Erfindung,
- Fig. 8: in perspektivischer Darstellung die Antriebseinheit eines elektromagnetischen Ventils mit einem als Ringelement ausgebildeten Ventilbauteil vor der Montage an dem Joch der Antriebseinheit,
- Fig. 9: in vergrößerter perspektivischer Darstellung das als Ringelement ausgebildete Ventilbauteil nach Fig. 8 vor seiner Montage an dem Joch der Antriebseinheit,
- Fig. 10: in perspektivischer Darstellung die Antriebseinheit des elektromagnetischen Ventils nach Fig. 8 mit einem an dem Joch montierten, als Ringelement ausgebildeten Ventilbauteil,
- Fig. 11: eine Draufsicht auf die nach Art einer Brille ausgebildeten Ventilsitze eines erfindungsgemäßen Ventils in weiterer Ausführungsform.

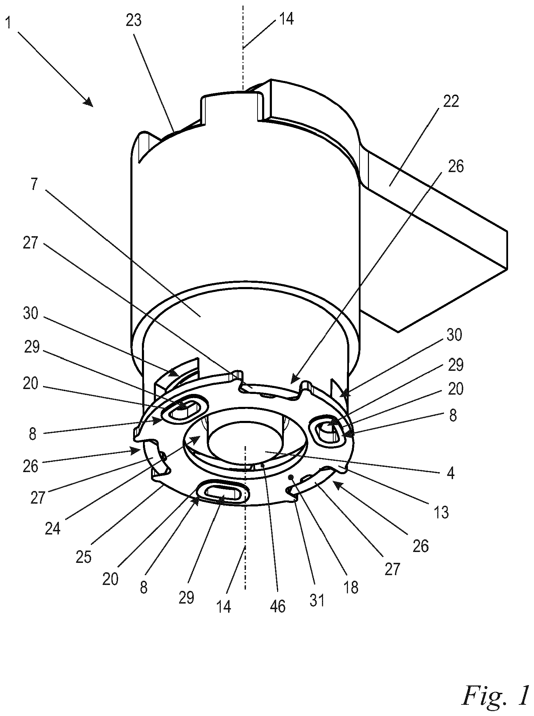

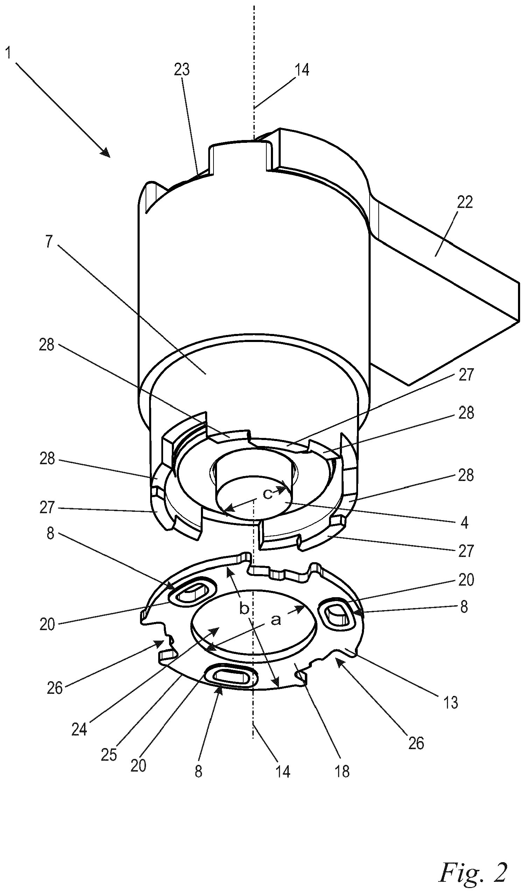

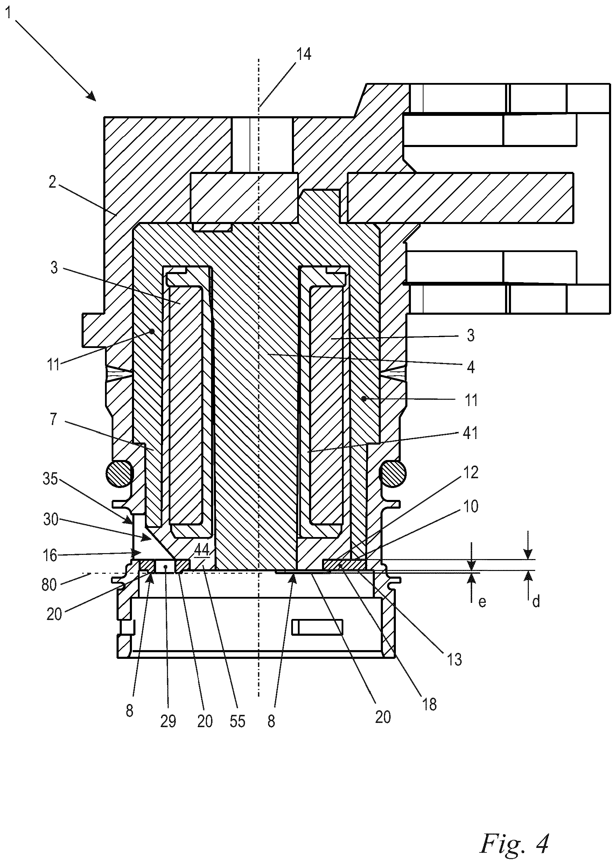

In den Figuren 1 und 2 ist ein Ausführungsbeispiel eines elektromagnetischen Ventils 1 dargestellt. Das elektromagnetische Ventil 1 weist eine elektrische Antriebsspule 3 (Fig. 4) auf, in der ein magnetischer Innenkern 4 angeordnet ist. Das elektromagnetische Ventil 1 weist eine Längsmittelachse 14 auf. Die Längsmittelachse 14 verläuft mittig durch den magnetischen Innenkern 4 entlang seiner Längsrichtung. Der Innenkern 4 ist vorzugsweise einteilig mit einem die elektrische Antriebsspule 3 umgebenden, hohlzylindrischen Außenkern 7 ausgebildet und bildet zusammen mit diesem ein magnetisches Joch 11. Das Joch 11 hat eine topfförmige Grundform. Der Innenkern 4 ist über einen magnetischen Bodenabschnitt 23 mit dem magnetischen Außenkern 7 verbunden. An dem Bodenabschnitt 23 ist auf der dem Innenkern 4 abgewandten Seite ein elektrischer Anschlussstecker 22 angeordnet. Über den elektrischen Anschlussstecker 22 ist das elektromagnetische Ventil 1 an einen Stromkreis anzuschließen und wird mit Strom versorgt.

Wie das Ausführungsbeispiel nach den Figuren 1 und 2 zeigt, ist an der dem Bodenabschnitt 23 abgewandten Seite des Jochs 11 ein als Ringelement 10 ausgebildetes Ventilbauteil 18 angeordnet. Das Ringelement 10 hat eine erste Stirnseite 12 (Fig. 4), die dem Bodenabschnitt 23 des Jochs 11 zugewandt liegt. Das Ringelement 10 weist eine zweite Stirnseite 13 auf, die dem Bodenabschnitt 23 des Jochs 11 abgewandt liegt. Das Ventilbauteil 18 ist im Wesentlichen kreisscheibenförmig als Ringelement 10 ausgebildet und weist vorteilhaft eine konzentrisch zur Längsmittelachse 14 ausgebildete zentrale Öffnung 24 auf. Das Ringelement 10 hat einen inneren Durchmesser a, welcher dem Durchmesser der inneren Öffnung 24 des Ringelements 10 entspricht. Das Ringelement 10 hat ferner einen äußeren Durchmesser b, welcher im Wesentlichen dem Außendurchmesser des Ringelements 10 entspricht. Der äußere Durchmesser b des Ringelements 10 ist größer als der innere Durchmesser a des Ringelements 10. Der Innenkern 4 des Jochs 11 weist einen Durchmesser c auf. In vorteilhafter Ausführung ist der äußere Durchmesser b mindestens 1,5mal so groß wie der innere Durchmesser a. In dem gezeigten vorteilhaften Ausführungsbeispiel ist der innere Durchmesser a mindestens 1,25mal, vorzugsweise mindestens 1,5mal so groß wie der Durchmesser c des Innenkerns 4.

In den Figuren 1 und 2 ist gezeigt, dass das Ringelement 10 einen äußeren Rand 25 aufweist. In dem Rand 25 sind in einem Winkelabstand von vorzugsweise etwa 120° Aussparungen 26 ausgebildet. Auf der dem Bodenabschnitt 23 abgewandten Seite des Jochs 11 sind Anlageflächen 28 und Erhebungen 27 ausgebildet. Vorzugsweise sind die Erhebungen 27 in Umfangsrichtung des Außenkerns 7 in einem Winkelabstand von 120° zueinander angeordnet. Das Ringelement 10 ist vorteilhaft an dem Joch 11 derart angeordnet, dass die Erhebungen 27 des Außenkerns 7 in die Aussparungen 26 des Ringelements 10 eingreifen und die Anlageflächen 28 des Außenkerns 7 an der ersten Stirnseite 12 des Ringelements 10 anliegen. Dadurch ist das Ringelement 10 mit dem Außenkern 11 des Jochs 11 formschlüssig verbunden. Das Ringelement 10 ist formschlüssig gegen ein Verdrehen um die Längsmittelachse 14 gegenüber dem Joch 11 gesichert. Das Ringelement 10 ist in Umfangsrichtung zur Längsmittelachse 14 formschlüssig und axial zur Längsmittelachse 14 reibkraftschlüssig gesichert.

In einem vorteilhaften Ausführungsbeispiel liegen die zweite Stirnseite 13 des Ringelementes 10 und die Stirnfläche der Erhebung 27 in einer gemeinsamen Ebene. Die Längsmittelachse 14 liegt senkrecht zur Ebene. Das Ringelement 10 weist mindestens eine Nase 31 (Fig. 1) auf. Im Ausführungsbeispiel sind an jeder Aussparung 26 des Ringelementes 10 jeweils zwei Nasen 31 an dem äußeren Rand 25 ausgebildet. Das Ringelement 10 weist mindestens sechs Nasen 31 auf, die das Ringelement 10 im eingespritzten Zustand im Ventilgehäuse 2 in Richtung der Längsmittelachse 14 sichern. Wie in der Fig. 1 gezeigt, endet der Innenkern 4 mit seiner dem Bodenabschnitt 23 abgewandten Stirnseite in Richtung der Längsmittelachse 14 zwischen einer Ebene, in welcher die erste Stirnseite 12 des Ringelementes 10 liegt und einer Ebene, in welcher die zweite Stirnseite 13 des Ringelementes 10 liegt.

In den Fig. 1 und 2 ist gezeigt, dass das Ringelement 10 drei Ventilsitze 8 und drei Ventilöffnungen 29 aufweist. Jede als Durchströmöffnung ausgebildete Ventilöffnung 29 ist von einem Ventilsitz 8 umgeben. Jeder Ventilsitz 8 besitzt einen erhöhten umlaufenden Rand 20, der einen Dichtsitz bildet. In einem vorteilhaften Ausführungsbeispiel kann im Betrieb des elektromagnetischen Ventils 1 ein zu steuerndes Fluid, insbesondere ein Kraftstoff, durch die Ventilöffnungen 29 fließen. Um den Strömungsquerschnitt zu verändern, kann die Anzahl der Ventilöffnungen 29 angepasst werden. So enthält in vorteilhaftem Ausführungsbeispiel das Ringelement 10 mindestens eine Ventilöffnung 29, insbesondere mindestens zwei Ventilöffnungen 29, vorzugsweise mindestens drei Ventilöffnungen 29. Zweckmäßig kann das Ringelement 10 auch mit vier oder mehr Ventilöffnungen 29 ausgebildet werden.

Auf der zweiten Stirnseite 13 des Ringelementes 10 ist der Ventilsitz 8 einer Ventilöffnung 29 durch einen umlaufenden Rand 20 gebildet. Der gegenüber der Stirnseite 13 erhöhte Rand 20 bildet einen Dichtsitz des Ventilsitzes 8. Der erhöhte Rand 20 kann auch als Absatz bezeichnet werden. Der erhöhte Rand 20 erstreckt sich ausgehend von der zweiten Stirnseite 13 des Ringelementes 10 in eine Richtung parallel zur Längsmittelachse 14. Der an dem Rand 20 ausgebildete Dichtsitz liegt in einer Ebene, die senkrecht zur Längsmittelachse 14 steht.

Für das Ringelement 10 können verschiedene Werkstoffe oder Werkstoffkombinationen eingesetzt werden. Im Ausführungsbeispiel besteht das Ringelement 10 aus einem magnetischen Metall, insbesondere aus einer magnetischen Stahllegierung. Es kann zweckmäßig sein, das Ringelement 10 aus einem nichtmagnetischen Metall auszubilden, insbesondere aus einer nichtmagnetischen Stahllegierung, vorzugsweise aus einem Edelstahl.

Wie in Fig. 1 gezeigt, sind an dem Joch 11 auf seiner dem Bodenabschnitt 23 abgewandten Seite Aussparungen ausgebildet, welche Öffnungen 30 zwischen dem Ringelement 10 und dem Joch 11 bilden. Ein Fluid kann über die Öffnungen 30 des Jochs 11 hin zu den Ventilöffnungen 29 des Ringelementes 10 fließen. Die Anzahl der am Joch 11 ausgebildeten Öffnungen 30 entspricht vorzugsweise der Anzahl der Ventilöffnungen 29 des Ringelementes 10.

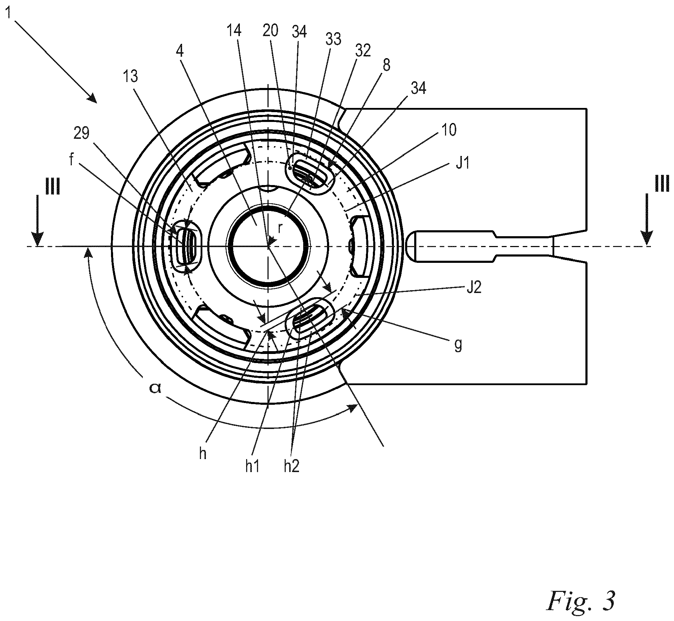

Wie in Fig. 3 gezeigt, sind die Ventilöffnungen 29 des Ringelements 10 zueinander symmetrisch um die Längsmittelachse 14 angeordnet. Im Ausführungsbeispiel besitzen die drei Ventilöffnungen 29 zueinander jeweils einen gleichen Winkelabstand α in Umfangsrichtung von 120°. Zweckmäßig kann auch ein ungleichmäßiger Winkelabstand α der Ventilöffnungen 29 zueinander möglich.

Eine Ventilöffnung 29 besitzt in Draufsicht, welche einer Blickrichtung senkrecht auf die zweite Stirnseite 13 des Ringelementes 10 entspricht, eine in etwa rechteckige bis ovale Grundform. So kann eine Ventilöffnung 29 eine in Umfangsrichtung der Längsmittelachse 14 gemessene maximale Länge f und eine in radialer Richtung zur Längsmittelachse 14 gemessene maximale Breite g aufweisen. Die Länge f der Ventilöffnung 29 ist vorzugsweise größer als die Breite g der Ventilöffnung 29. In einem vorteilhaften Ausführungsbeispiel entspricht die Länge f der Ventilöffnung 29 mindestens der doppelten Breite g der Ventilöffnung 29.

Der Dichtsitz eines Ventilsitzes 8 verläuft um die Ventilöffnung 29 herum und weist eine Breite h auf, welche radial zum Flächenmittelpunkt der Ventilöffnung 29 gemessen ist. Die Ventilöffnung 29 weist eine innere Längsseite 32 und eine äußere Längsseite 33 auf, die sich in Umfangsrichtung der Längsmittelachse 14 erstrecken, sowie zwei sich in radialer Richtung der Längsmittelachse 14 erstreckende Querseiten 34. Die Querseiten 34 verbinden die innere Längsseite 32 und die äußere Längsseite 33 miteinander. In vorteilhafter Ausführung können die Ventilöffnungen 29 auch rund, insbesondere kreisrund ausgebildet sein.

In vorteilhaftem Ausführungsbeispiel sind die Breiten h₁ des Ventilsitzes 8 an den Querseiten 34 der Ventilöffnungen 29 größer als die Breiten h₂ des Ventilsitzes 8 an den Längsseiten 32, 33 der Ventilöffnung 29.

Der Radius der Ventilöffnung 29 ist am Übergang zwischen der Querseite 34 und der inneren Längsseite 32 größer als der Radius an den Übergängen zwischen den Querseiten 34 und der äußeren Längsseite 33. In vorteilhafter Ausführung kann die Ventilöffnung 29, beispielsweise zur Begünstigung des Fluidstroms, auch andere Grundformen aufweisen, insbesondere elliptisch, geformt sein.

Wie in Fig. 4 gezeigt, sind die elektrische Antriebsspule 3, das Joch 11 mit dem Innenkern 4 und dem Außenkern 7 sowie als Ventilbauteil 18 das Ringelement 10 in dem aus Kunststoff bestehenden Ventilgehäuse 2 eingegossen, insbesondere eingespritzt. Der Kunststoff des Ventilgehäuses 2 besteht vorteilhaft aus Polyvinylidenfluorid (PVDF). Das elektromagnetische Ventil 1 umfasst mindestens einen ersten Strömungskanal 16. Der erste Strömungskanal 16 verläuft ausgehend von einer Gehäuseöffnung 35 bis zur Ventilöffnung 29. Die Gehäuseöffnung 35 liegt in der Außenseite des Ventilgehäuses 2. Der erste Strömungskanal 16 erstreckt sich zweckmäßig über die Öffnung 30 des Jochs 11 hin zur Ventilöffnung 29 des Ringelementes 10. Die Anzahl der Gehäuseöffnungen 35 sowie die Anzahl der Strömungskanäle 16 entsprechen vorzugsweise der Anzahl der Ventilöffnungen 29 des Ringelementes 10.

Wie in Fig. 4 gezeigt, entspricht die Höhe e des Randes 20 dem in Richtung der Längsmittelachse 14 gemessenen Abstand zwischen der zweiten Stirnseite 13 des Ringelementes 10 und dem Dichtsitz des Ventilsitzes 8. Die Höhe d des Ringelementes 10 entspricht dem in Richtung der Längsmittelachse 14 gemessenen Abstand d zwischen der ersten Stirnseite 12 und der zweiten Stirnseite 13 des Ringelementes 10. Im Ausführungsbeispiel ist die Höhe e des Randes 20 kleiner als die Höhe d des Ringelementes 10. In vorteilhafter Ausführung entspricht die Höhe d des Ringelementes 10 mindestens der 3fachen, insbesondere mindestens der 5fachen Höhe e des Absatzes 20. Die Breite h des Ventilsitzes 8 (Fig. 3) ist größer als die Höhe e des Absatzes 20. In vorteilhafter Ausführung entspricht die Breite h mindestens der 3fachen Höhe e des Absatzes 20. In einem vorteilhaften Ausführungsbeispiel liegt die dem Bodenabschnitt 23 abgewandte Stirnseite des Innenkerns 4 in einer Ebene, welche zwischen der zweiten Stirnseite 13 des Ringelementes 10 und dem Dichtsitz des Ventilsitzes 8 des Ringelementes 10 liegt.

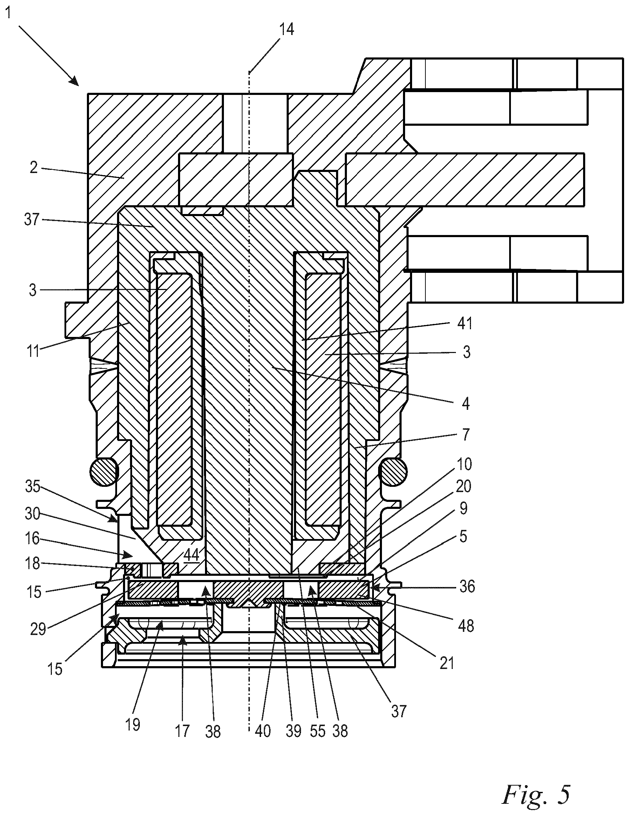

In Fig. 5 ist das elektromagnetische Ventil 1 in einer ersten Schaltstellung gezeigt. An der dem Bodenabschnitt 23 des Jochs 11 abgewandten Seite des Jochs 11 ist ein metallischer Plattenanker 5 angeordnet. Der Plattenanker 5 ist in Richtung der Längsmittelachse 14 im Ventilgehäuse 2 beweglich gelagert. Der Plattenanker 5 besteht aus einer kreisscheibenförmig ausgebildeten Ankerscheibe 48, auf die eine als dünne Scheibenfeder ausgebildete Ventilfeder 21 wirkt. Die Ventilfeder 21 ist konzentrisch zur Längsmittelachse 14 im Ventilgehäuse 2 gehalten. Zwischen dem Ventilgehäuse 2 und dem Plattenanker 5 ist vorzugsweise im Bereich des Umfangs der Ankerscheibe 48 ein Ringspalt 36 ausgebildet. In der Ankerscheibe 48 des Plattenankers 5 ist mindestens eine Strömungsöffnung 38 vorgesehen, deren Öffnungsachse parallel zur Längsmittelachse 14 verläuft. Vorteilhaft enthält die Ankerscheibe 48 des Plattenankers 5 mehrere Strömungsöffnungen 38, welche in Umfangsrichtung symmetrisch zur Längsmittelachse 14 angeordnet sind. In vorteilhafter Ausführung ist auch eine unsymmetrische Anordnung der Strömungsöffnungen 38 um die Längsmittelachse 14 möglich.

Wie in Fig. 5 gezeigt, weist die Ventilfeder 21 einen Außenumfang und einen Innenumfang auf. Die Ventilfeder 21 ist an ihrem Außenumfang an dem Ventilgehäuse 2 befestigt und an ihrem Innenumfang mit der Ankerscheibe 48 des Plattenankers 5 fest verbunden. Die Ventilfeder 21 enthält Strömungsöffnungen. Vorzugsweise ist die Ventilfeder 21 als Flachfeder mit mäanderförmigen Biegearmen ausgebildet. Auch der Einsatz anderer Ventilfedern kann zweckmäßig sein.

Wie in Fig. 5 gezeigt, umfasst das elektromagnetische Ventil 1 einen Ventildeckel 37, der in die offene Stirnseite des Ventilgehäuses 2 eingesetzt ist. Der Ventildeckel 37 ist im Ventilgehäuse 2 auf der dem Bodenabschnitt 23 des Jochs 11 abgewandten Seite des Plattenankers 5 angeordnet. Der Ventildeckel 37 ist vorzugsweise mit dem Ventilgehäuse 2 formschlüssig verbunden. In vorteilhafter Ausführung kann auch eine andere Verbindung zwischen Ventildeckel 37 und Ventilgehäuse 2 zweckmäßig sein. Im Zentrum des Ventildeckels 37 ist ein Zylinder 39 ausgebildet, welcher konzentrisch zur Längsmittelachse 14 angeordnet ist. Am Zylinder 39 ist eine Anlagefläche 40 ausgebildet, an welcher die Ventilfeder 21 in der ersten Schaltstellung des elektromagnetischen Ventils 1 anliegt.

Das elektromagnetische Ventil 1 nimmt Schaltstellungen ein, um den Durchfluss des Fluids zu steuern:
Bei ausgeschaltetem Betriebsstrom ist die elektrische Antriebspule 3 stromlos, das elektromagnetische Ventil 1 liegt in der ersten Schaltstellung (Fig. 5). Die Ventilfeder 21 liegt an der Anlagefläche 40 des Zylinders 39 des Ventildeckels 37 an. Die Ventilfeder bestimmt so die Lage des Plattenankers 5, in der eine Dichtfläche 9 der Ankerscheibe 48 des Plattenankers 5 nicht am Ventilsitz 8 des Ringelementes 10 anliegt. Die Ventilöffnungen 29 sind offen. Das Fluid kann über die Gehäuseöffnung 35 und den ersten Strömungskanal 16, die Öffnung 30 und über die Ventilöffnung 29 des Ringelementes 10 in eine Ventilkammer 15 strömen. Die Ventilkammer 15 ist im Ventilgehäuse 2 ausgebildet.

Aus der Ventilkammer 15 strömt das Fluid durch die Strömungsöffnungen 38 der Ankerscheibe 48 des Plattenankers 5 und weiter durch den Ringspalt 36 zwischen der Ankerscheibe 48 und dem Ventilgehäuse 2, um durch die Öffnungen der Ventilfeder 21 zum Ventildeckel 37 zu strömen. Über zumindest eine Öffnung 19 im Ventildeckel 37 strömt das Fluid durch mindestens einen zweiten Strömungskanal 17 zum Ventilausgang. Der zweite Strömungskanal 17 ist vorteilhaft im Ventildeckel 37 ausgebildet. Der mindestens eine zweite Strömungskanal 17 verläuft vorteilhaft parallel zur Längsmittelachse 14 des elektromagnetischen Ventils 1. Zweckmäßig entspricht die Anzahl der Öffnungen 19 sowie der zweiten Strömungskanäle 17 des Ventildeckels 37 der Anzahl der Ventilöffnungen 29 des Ringelements 10, um über den gesamten Strömungsverlauf des Fluids durch das elektromagnetische Ventil 1 einen nahezu konstanten Strömungsquerschnitt zu erzielen.

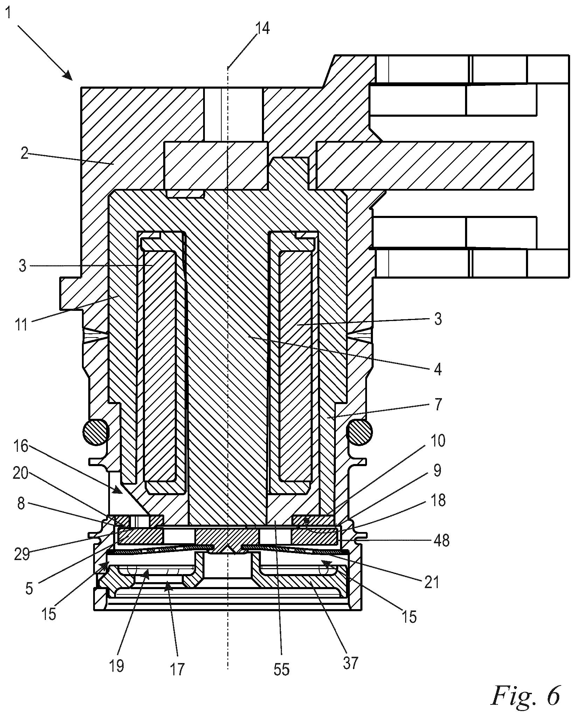

Bei eingeschaltetem Betriebsstrom fließt in der elektrischen Antriebsspule 3 ein Strom, wodurch ein elektromagnetisches Feld erzeugt wird, welches das elektromagnetische Ventil 1 in die zweite Schaltstellung schaltet, die in Fig. 6 gezeigt ist. Die Ankerscheibe 48 des Plattenankers 5 wird entgegen der Federkraft der Ventilfeder 21 vom Joch 11 angezogen, wodurch die Dichtfläche 9 der Ankerscheibe 48 an den Ventilsitzen 8 des Ringelementes 10 dichtend zur Anlage gelangt. Die Ankerscheibe 48 des Plattenankers 5 verschließt die Ventilöffnungen 29 des Ringelementes 10. Der Durchfluss des Fluids in die Ventilkammer 15 ist gesperrt.

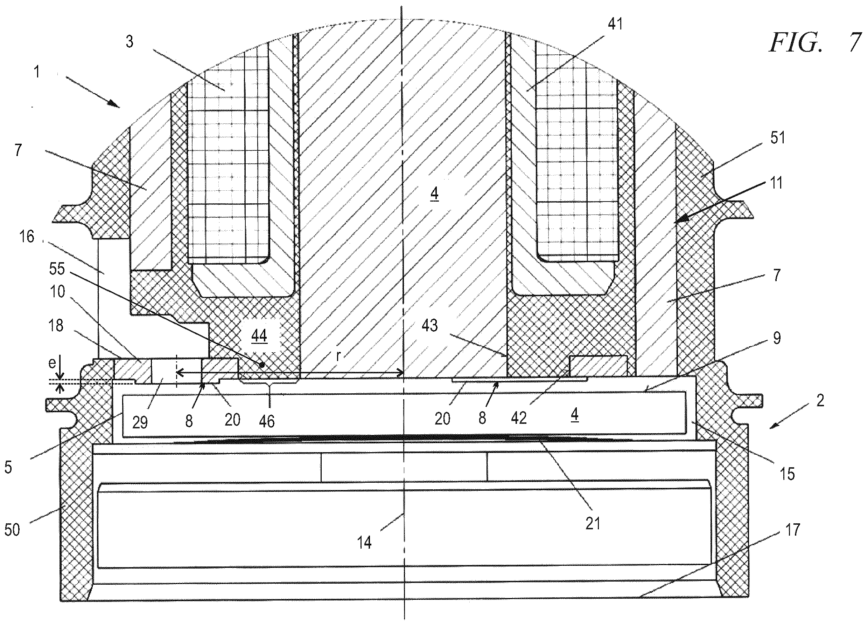

Das in Fig. 7 im Schnitt dargestellte elektromagnetische Ventil 1 ist für gasförmige und flüssige Medien vorgesehen. Es ist bezüglich einer Längsmittelachse 14 als im Wesentlichen kreiszylindrischer Körper ausgebildet und besitzt ein aus Kunststoff bestehendes Ventilgehäuse 2 sowie für eine elektromagnetische Ventilbetätigung eine elektrische Antriebsspule 3. Im Ventilgehäuse 2 ist eine Ventilkammer 15 ausgebildet, die von einer aus Kunststoff gebildeten Umfangswand 50 des Ventilgehäuses 2 mitbegrenzt ist. Die in Fig. 7 untere Seite des Ventilgehäuses 2 ist offen. Die offene Seite bildet einen als zweiten Strömungskanal 17 vorgesehenen Ausgang für das Medium.

In der Ventilkammer 15 befindet sich ein axial verlagerbarer Plattenanker 5. Der Plattenanker 5 besteht vorteilhaft aus einer koaxial zur Längsmittelachse 14 liegenden metallischen Ankerscheibe 48 und einer dünnen Scheibenfeder, die eine Ventilfeder 21 bildet. Die Ankerscheibe 48 kann von einer oder mehreren Durchgangsbohrungen durchsetzt sein. Die Ankerscheibe 48 und die als Ventilfeder 21 vorgesehene Scheibenfeder können zweckmäßig zu einer Baueinheit zusammengefasst sein. Die Ankerscheibe 48 ist an der der Scheibenfeder bzw. der Ventilfeder 21 abgewandten Oberseite mit einer insbesondere mit hoher Festigkeit gegen Verschleiß ausgebildeten planen Dichtfläche 9 versehen.

Der in Fig. 7 obere Teil der Ventilkammer 15 ist im Wesentlichen von einem Magnetkopf begrenzt. Der Magnetkopf besitzt ein magnetisches Joch 11, das einen rundstabförmigen Innenkern 4 und einen im Durchmesser größeren, rohrförmigen Außenkern 7 umfasst, die koaxial zur Längsmittelachse 14 angeordnet sind. In dem Ringraum zwischen dem Innenkern 4 und dem Außenkern 7 ist, vorzugsweise ebenfalls koaxial zur Längsmittelachse 14, die elektrische Antriebsspule 3 vorgesehen, die auf einem Spulenträger 41 angeordnet ist.

Der Magnetkopf ist von einer Außenwand 51 umschlossen, die wie die Umfangswand 50 des Ventilgehäuses 2 aus Kunststoff besteht und mit letzterer vorzugsweise als materialeinheitlich einstückiges Bauteil ausgeführt ist.

An der dem Plattenanker 5 zugewandten Unterseite des Magnetkopfs ist koaxial zur Längsmittelachse 14 ein Ventilbauteil 18 angeordnet. Das Ventilbauteil 18 ist mit einer insbesondere als Ringelement 10 ausgebildeten Grundscheibe und mindestens einem Ventilsitz 8 bevorzugt materialeinheitlich und einstückig aus einem Metall gefertigt. Das Ventilbauteil 18 aus dem Ringelement 10 und mindestens einem Ventilsitz 8 ist zweckmäßig als im Stanz-/Biegeverfahren hergestellte Baueinheit ausgeführt. Bevorzugt besteht das Ventilbauteil 18 aus einem magnetisierbaren Metall. Das Ventilbauteil 18 kann insbesondere als Einsatzteil ausgebildet sein, welches in das Material des Ventilgehäuses 2 eingegossen wird.

In der Grundscheibe bzw. dem Ringelement 10 des Ventilbauteils 18 ist mindestens ein Durchströmloch als Ventilöffnung 19 für das Medium ausgebildet. Fig. 7 zeigt, dass der Ventilsitz 8 als erhabener Metallrand 20 ausgebildet ist, der die Ventilöffnung 19 ringsum begrenzt. Der Metallrand überragt auf der dem Plattenanker 5 zugewandten Seite die Ebene der Grundscheibe bzw. des Ringelementes 10 um ein Maß e.

In bevorzugter Ausführung kann die als Ringelement 10 ausgebildete Grundscheibe des Ventilbauteils 18 drei Ventilöffnungen 29 mit drei zugehörigen Ventilsitzen 18 aufweisen, die bezüglich der Längsmittelachse 14 in gleichmäßigen 120°-Winkelabständen kreisförmig angeordnet sind. Zudem kann es vorteilhaft sein, die Ventilöffnungen 29 als etwas gebogene längliche Rechtecklöcher teilkreisförmig auszubilden und die Ventilsitze 8 der Randkonfiguration der Ventilöffnungen 29 anzupassen. Dabei kann es auch vorteilhaft sein, die Eckbereiche der rechteckförmigen Ventilöffnungen 29 mit Radien zu versehen und somit gerundet auszubilden.

Außerdem besitzt das Ventilbauteil 18 ein in der Grundscheibe 17 zentral ausgebildetes Durchgangsloch, dessen Durchmesser größer ist als der Durchmesser des Innenkerns 4, so dass zwischen der Begrenzungswand 42 des Durchgangslochs und der Umfangsfläche 43 des Innenkerns 4 ein ringförmiger Abstand 46 gebildet ist. Das Ventilbauteil 18 selbst ist am Innenkern des Magnetkopfs befestigt. Die Befestigung erfolgt bevorzugt so, dass mindestens ein Teil der Umfangsaußenfläche der Grundscheibe bzw. des Ringelementes 10 an der Innenfläche der rohrförmigen Wand des Außenkerns 7 ortsfest positioniert ist. Dabei kann die Umfangsfläche des Ringelementes 10 bzw. der Grundscheibe zweckmäßig mittels Presssitz an der Innenfläche des Außenkerns 7 festgelegt sein.

Die als Ringelement 10 ausgebildete Grundscheibe des Ventilbauteils 18 ist als Einsatzteil formschlüssig in dem Kunststoff 44 des Ventilgehäuses 2 eingebettet, so dass ein hermetisch dichter Abschluss des Magnetjoches 11 zur Ventilkammer 15 gebildet ist. Der Ventilsitz 8 selbst ist nicht in Kunststoff eingebettet bzw. mit Kunststoff beschichtet, sondern ist insbesondere metallisch frei. Somit liegt der ebene Dichtrand des Ventilsitzes 8 bei angezogenem Plattenanker 5 unmittelbar auf der ebenen Dichtfläche 9 der Ankerscheibe 48 dicht an. Der Kunststoff 44 füllt den Abstand 46 zwischen der Begrenzungswand 42 des Ringelementes 10 und der Umfangsfläche 43 des Innenkerns 4 insbesondere vollständig aus. Die als Ringelement 10 ausgebildete Grundscheibe und der Innenkern 4 sind durch den Kunststoff 44 als einem nicht magnetisierbaren Werkstoff magnetisch getrennt. Der verwendete Kunststoff 23 für das Ventilgehäuse 2 sowie für die Einbettung der elektrischen Antriebsspule 13 und des Ventilbauteils 18 sowie die Ausfüllung des Abstands 46 kann zweckmäßig materialeinheitlich sein. Fig. 7 zeigt, dass die dem Plattenanker 5 zugewandte Stirnseite des den Abstand 46 ausfüllenden Kunststoffs 44 und die Stirnseite des Innenkerns 4 vorzugsweise in einer gleichen Ebene liegen, die gegenüber dem dichtenden Metallrand 20 des Ventilsitzes 8 geringfügig zurückversetzt liegt.

Für die Zuführung des Mediums ist an der in Fig. 7 linken Seite unmittelbar über dem Ventilsitz 8 des Ventilbauteils 18 ein erster Strömungskanal 16 ausgebildet, so dass das Medium auf kürzestem Weg durch die Ventilöffnung 29 in die Ventilkammer 15 gelangt. Vorteilhaft weist das Ventil 1 drei zuführende Strömungskanäle 16 auf, die je einem Ventilsitz 8 zugeordnet und bezüglich der Längsmittelachse 14 in Umfangsrichtung in gleichmäßigen 120°-Winkelabständen zueinander angeordnet sind.

Das beschriebene Ventil 1 weist den Vorteil eines geringen Verschleißes und einer dauerhaft hohen Funktionstüchtigkeit auf. Ein weiterer Vorteil besteht darin, dass durch das aus magnetisierbarem Werkstoff hergestellte Ventilbauteil 18 der Magnetkreis positiv beeinflusst und die auf den Plattenanker 5 wirkende magnetische Anzugskraft verstärkt wird, wodurch eine hohe Ventilsitzdichtigkeit gewährleistet ist.

In einer alternativen Ausführungsform kann das elektromagnetische Ventil 1 ein Ventilbauteil 18 wie das Ringelement 10 nur einem einzigen Ventilsitz 8 aufweisen. Anstelle einer zentralen Öffnung 24 im Ventilbauteil 18 kann der Ventilsitz 8 mittig im Ventilbauteil 18 angeordnet sein. Dann liegt die Ventilöffnung 29 des Ventilsitzes 8 in etwa koaxial zur Längsmittelachse 14 angeordnet.

In einer alternativen, in den Figuren nicht dargestellten Ausführungsform kann das elektromagnetische Ventil auch als stromlos geschlossenes Ventil ausgeführt sein. Ein Ventilbauteil in Form eines Ringelementes kann im Ventilgehäuse zwischen dem metallischen Plattenanker und dem Ventildeckel angeordnet sein. Vorzugsweise ist das Ventilbauteil im Ventildeckel gehalten, zweckmäßig eingegossen, insbesondere umspritzt. Das Ventilbauteil weist vorteilhaft einen zentralen Ventilsitz auf, welcher anstelle der inneren Öffnung mittig im Ringelement angeordnet ist. Die Ventilöffnung des Ventilsitzes ist koaxial zur Längsmittelachse angeordnet und mündet in dem Zylinder des Ventildeckels. Der erste Strömungskanal des Ventils verläuft durch den Ventildeckel. Ist die elektrische Antriebsspule mit Strom beaufschlagt, wird die metallische Ankerscheibe 48 des Plattenankers gegen das Joch gezogen und gibt den Ventilsitz frei. Das Fluid kann über den ersten Strömungskanal durch den Ventildeckel in den zweiten Strömungskanal strömen, welcher aus der zentralen Ventilöffnung des Ventilsitzes sowie dem zentralen Zylinder des Ventildeckels besteht. Ist die elektrische Antriebsspule stromlos, wird die Ankerscheibe 48 des Plattenankers von der Ventilfeder gegen den zentralen Ventilsitz gedrückt. Die Strömungsverbindung zwischen dem ersten Strömungskanal und dem zweiten Strömungskanal ist unterbrochen. Vorteilhaft kann der Ventildeckel auch weitere und/oder andere Strömungskanäle aufweisen.

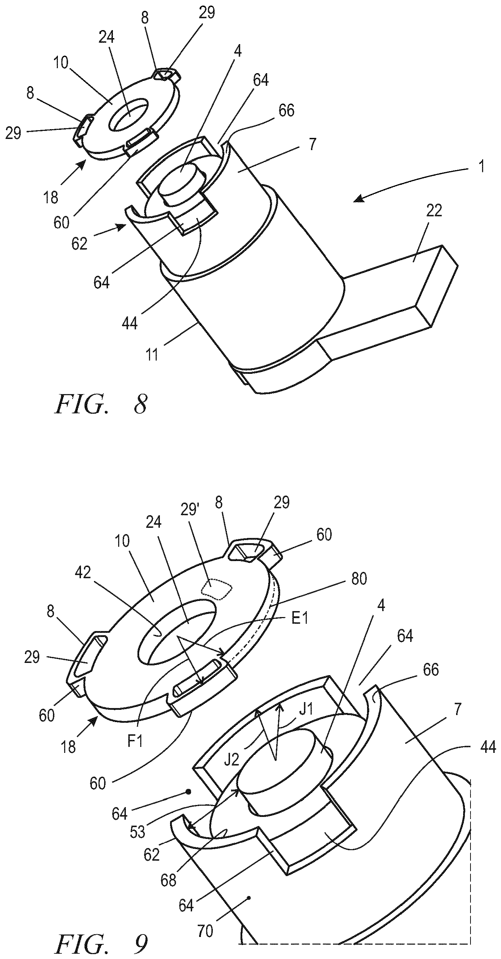

Im Ausführungsbeispiel eines elektromagnetischen Ventils 1 nach den Figuren 8 bis 10 ist das Ventilbauteil 18 als Ringelement 10 ausgebildet. In dem Ringelement 10 sind Ventilöffnungen 29 ausgebildet. Vorteilhaft sind an dem Ringelement 10 Ventilsitze 8 ausgebildet.

Das Ringelement 10 weist - wie insbesondere die Figuren 8 und 9 zeigen - eine zentrale Öffnung 24 auf. Der Innendurchmesser a (Fig. 2) der zentralen Öffnung 24 ist vorteilhaft größer, insbesondere geringfügig größer als der Innendurchmesser c (Fig. 2) des zylindrischen Innenkerns 4.

Das Ringelement 10 weist im Ausführungsbeispiel nach den Figuren 8 bis 10 mindestens einen insbesondere radialen Befestigungsabschnitt 60 auf. Der mindestens eine Befestigungsabschnitt 60 steht über dem Außendurchmesser E1 (Fig. 9) des Ringelementes 10 radial vor. Bevorzugt weist das Ringelement 10 drei Befestigungsabschnitte 60 auf. Der mindestens eine Befestigungsabschnitt 60 endet vorteilhaft an einem äußeren Flanschdurchmesser F1. Wie die Figuren 8 und 9 beispielhaft zeigen, sind die Ventilöffnungen 29 in den Befestigungsabschnitten 60 ausgebildet. Die Ventilsitze 8 können als erhöhter Rand der Ventilöffnung 29 ausgebildet sein.

Im Ausführungsbeispiel gemäß Figuren 8 und 9 weist der Außenkern 7 Aussparungen 64 auf. Der Außenkern 7 ist vorteilhaft als Außenzylinder ausgebildet. Der Außenkern 7 des Magnetjochs 11 weist vorteilhaft in seinem dem Ventilbauteil 18 zugewandten Ende 62 Aussparungen 64 auf. Die Aussparungen 64 sind bevorzugt zur Stirnseite 66 des Außenkerns 7 offen.

Der Innenkern 4 ist vorteilhaft als zylindrischer Vollstab ausgebildet. Die Umfangsfläche 43 des Innenkerns 4 weist zweckmäßig einen Abstand 53 zur Innenwand 68 des Außenzylinders des Außenkerns 7 auf. Aufgrund des vorgesehenen Abstandes 53 ist ein Ringraum ausgebildet, so dass zwischen diesen beiden Bauteilen beispielsweise ein Luftspalt gebildet ist. Der Ringraum zwischen der Umfangsfläche 43 des Innenkerns 4 und der Innenwand 68 des Außenkerns 7 ist vorteilhaft mit einem nicht magnetischen Material, insbesondere mit Kunststoff 44 verfüllt.

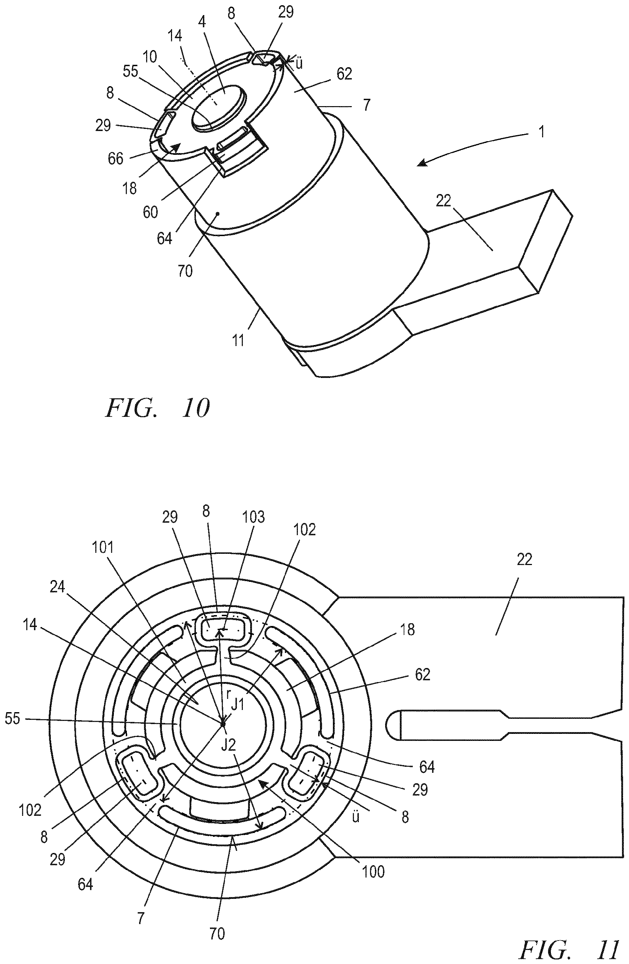

Wie Fig. 10 zeigt, wird das als Ringelement 10 ausgebildete Ventilbauteil 18 in den Ringraum zwischen dem Innenkern 4 und der Innenwand 68 des Außenkerns 7 aufgenommen. Das Ventilbauteil 18 liegt dabei vorteilhaft auf dem Kunststoff 44 auf. Das Ventilbauteil 18 ist besonders bevorzugt als Einsatzteil in den Kunststoff 44 eingebettet, insbesondere eingegossen. Im montierten Zustand des Ventilbauteils 18 gemäß Fig. 10 liegen die Befestigungsabschnitte 60 in den Aussparungen 64 des Außenkerns 7. Die innere Begrenzungswand 42 der inneren Öffnung 24 liegt im montierten Zustand vorteilhaft mit Abstand zur Umfangsfläche 43 des Innenkerns 4. Dadurch ergibt sich ein Luftspalt 55 zwischen dem Ventilbauteil 18 und dem Innenkern 4. Dies ergibt sich insbesondere auch aus den schematischen Schnittdarstellungen der Figuren 4 bis 7.

Durch die Anordnung der Ventilöffnungen 29 in den Befestigungsabschnitten 60 liegen die Ventilöffnungen 29 zumindest teilweise innerhalb der Aussparungen 64. Vorteilhaft können die Befestigungsabschnitte 60 mit einem Überstand ü radial über die äußere Umfangsfläche 70 des Außenkerns 7 vorragen. Durch den Eingriff des Ventilbauteils 18 in zumindest eine Aussparung 64 des Außenkerns 7 ist in Umfangsrichtung der Längsmittelachse 14 eine formschlüssige Verbindung zwischen dem Magnetjoch 11 und dem Ventilbauteil 18 erzielt. Darüber hinaus wird das Ventilbauteil 18 Teil des magnetischen Kreises des Jochs 11.

Wie auch in Fig. 3 dargestellt, hat der Außenzylinder einen Innendurchmesser J1 der Innenwand 68 sowie einen Außendurchmesser J2 der Umfangsfläche 70. Wie schematisch der Fig. 3 zu entnehmen, liegen die Ventilöffnungen 29 vorteilhaft auf dem Innendurchmesser J1 des Außenkerns 7. Der Ventilsitz 8 einer Ventilöffnung 29 kann in Draufsicht nach Fig. 3 an den Außendurchmesser J2 der Umfangsfläche des Außenkerns 7 angrenzen. Bevorzugt liegt die äußere Breite h2 des Ventilsitzes 8 auf dem Durchmesserkreis oder überragt diesen, wie in Fig. 10 gezeigt ist.

Alternativ zu einem Ausführungsbeispiel gemäß den Figuren 8 bis 10 kann die mindestens eine Ventilöffnung 29' (Fig. 9), bevorzugt drei Ventilöffnungen, in dem Ventilbauteil 18 auch nach innen zur Öffnung 24 versetzt liegen, also in Richtung auf den Innenkern 4 hin angeordnet sein. Auch in solch einem Ausführungsbeispiel liegen die Ventilöffnungen vorzugsweise in einer gemeinsamen Ebene 80.

Im Ausführungsbeispiel nach Fig. 11 ist das Ventilbauteil 18 als Rahmenelement 100 ausgebildet. Ein innerer Kreisring 101 weist die innere Öffnung 24 auf und trägt zumindest an einem Radialsteg 102 mindestens einen Ventilsitz 8. Im Ausführungsbeispiel nach Fig. 11 sind drei in einer gemeinsamen Ebene liegende Ventilsitze 8 vorgesehen. Mindestens einer der Ventilsitze 8 ist vorteilhaft in einer Aussparung 64 des Außenkerns 7 angeordnet. Besonders bevorzugt sind alle Ventilsitze 8 in jeweils einer Aussparung 64 des Außenkerns 7 angeordnet. In Umfangsrichtung um eine Längsmittelachse 14 sind die Aussparungen 64 breiter als ein Ventilsitz 8 ausgebildet. Die Lage innerhalb der Aussparung ist vorteilhaft derart vorgesehen, dass ein Zentrum 103 eines Ventilsitzes 8 auf dem inneren Durchmesserkreis J1 des Außenkerns 7 liegt.

Wie Fig. 11 zeigt, ragen die Ventilsitze 8 mit einem Überstand ü über die äußere Umfangsfläche 70 des Außenkerns 7 vor. Der Kreisring 101 mit den die Ventilsitze 8 haltenden Radialstegen 102 sind vorteilhaft einteilig aus Metall oder einer Metalllegierung gefertigt. Hierbei kann das das Ventilbauteil 18 bildende Rahmenelement 100 gestanzt, gegossen oder geätzt sein.

## Patentansprüche

1. Elektromagnetisches Ventil mit einem Ventilgehäuse (2), mit mindestens einer Ventilöffnung (29) mit einem Ventilsitz (8), sowie mit einem Magnetkreis mit einer elektrischen Antriebsspule (3) und einem magnetischen Joch (11) mit einer Längsmittelachse (14), und mit einem mit dem Joch (11) zusammenwirkenden metallischen Plattenanker (5) mit einer Ankerscheibe (48), die gegenüber dem Joch (11) beweglich gelagert ist, wobei die Ankerscheibe (48) in einer ersten Schaltstellung des Ventils mit einer Dichtfläche (9) an dem Ventilsitz (8) dichtend anliegt und in einer zweiten Schaltstellung des Ventils den Ventilsitz (8) freigibt, wobei der Ventilsitz (8) an einem Ventilbauteil (18) ausgebildet ist, und das Ventilbauteil (18) mindestens die eine Ventilöffnung (29) aufweist, und die Ventilöffnung (29) mit einem radialen Abstand (r) zur Längsmittelachse (14) liegt, und dass der mit der Dichtfläche der Ankerscheibe (48) des Plattenankers (5) mit direktem Körperkontakt korrespondierende Ventilsitz (8) der Ventilöffnung (29) aus Metall besteht,
**dadurch gekennzeichnet,**
**dass** das Ventilbauteil (18) im Wesentlichen kreisscheibenförmig als Ringelement (10) ausgebildet ist, eine konzentrisch zur Längsmittelachse (14) ausgebildete zentrale Öffnung (24) aufweist, und mindestens eine von einem Ventilsitz (8) umgebende Ventilöffnung (29) enthält, und dass an der einem Bodenabschnitt (23) abgewandten Seite des Jochs (11) das Ventilbauteil (18) angeordnet ist, wobei eine erste Stirnseite (12) des Ringelementes (10) dem Joch (11) zugewandt liegt.

2. Elektromagnetisches Ventil nach Anspruch 1,
**dadurch gekennzeichnet, dass** der Ventilsitz (8) als am Ringelement (10) ausgebildeter erhöhter Rand (20) der Ventilöffnung (29) ausgebildet ist.

3. Elektromagnetisches Ventil nach Anspruch 1,
**dadurch gekennzeichnet, dass** das Ventilbauteil (18) als Rahmenelement (100) ausgebildet ist, wobei das Rahmenelement (100) zumindest eine die Ventilöffnung (29) einfassende Metallbrille aufweist, die den Ventilsitz (8) bildet.

4. Elektromagnetisches Ventil nach Anspruch 1,
**dadurch gekennzeichnet, dass** das magnetische Joch (11) aus einem Außenkern (7) und einem Innenkern (4) besteht, wobei der Außenkern als Außenzylinder ausgebildet ist, wobei eine Zylinderwand des Außenzylinders einen inneren Durchmesserkreis (J1) aufweist, und die Ventilöffnung (29) auf dem Durchmesserkreis (J1) liegt.

5. Elektromagnetisches Ventil nach Anspruch 1,
**dadurch gekennzeichnet, dass** das Ventilbauteil (18) am Joch (11) formschlüssig angebunden ist.

6. Elektromagnetisches Ventil nach Anspruch 1,
**dadurch gekennzeichnet, dass** das magnetische Joch (11) aus einem Außenkern (7) und einem Innenkern (4) besteht, dass das Ventilbauteil (18) in dem Ringraum zwischen dem Innenkern (4) und einer Zylinderwand des Außenkerns (7) angeordnet ist, wobei das Ventilbauteil (18) in zumindest eine Aussparung (64) des Außenkerns (7) eingreift.

7. Elektromagnetisches Ventil nach Anspruch 6,
**dadurch gekennzeichnet, dass** das Ventilbauteil (18) formschlüssig drehfest in der Aussparung (64) der Zylinderwand des Außenkerns (7) gehalten ist.

8. Elektromagnetisches Ventil nach Anspruch 6,
**dadurch gekennzeichnet, dass** die Ventilöffnung (29) örtlich in der Aussparung (64) einer Zylinderwand des Außenkerns (7) liegt.

9. Elektromagnetisches Ventil nach Anspruch 1,
**dadurch gekennzeichnet, dass** das Ventilbauteil (18) ein Einsatzteil ist, und das Einsatzteil in das Material des Ventilgehäuses (2) eingegossen ist.

10. Elektromagnetisches Ventil nach Anspruch 1,
**dadurch gekennzeichnet, dass** das Ventilbauteil (18) formschlüssig dicht in einem Kunststoff (23) eingebettet ist.

11. Elektromagnetisches Ventil nach Anspruch 1,
**dadurch gekennzeichnet, dass** das Ventilbauteil (18) mit dem Ventilsitz (8) aus einem magnetisierbaren Metall besteht.

12. Elektromagnetisches Ventil nach Anspruch 1,
**dadurch gekennzeichnet, dass** das Ventilbauteil (18) mehr als einen Ventilsitz (8) aufweist und die Ventilsitze (8) in Umfangsrichtung um die Längsmittelachse (14) mit Abstand zueinander angeordnet sind.

13. Elektromagnetisches Ventil nach Anspruch 12,
**dadurch gekennzeichnet, dass** die mehreren Ventilsitze (8) in einer gemeinsamen Ebene (80) angeordnet sind.

14. Elektromagnetisches Ventil nach Anspruch 1,
**dadurch gekennzeichnet, dass** die Ventilöffnung (29) und der Ventilsitz (8) rechteckförmig mit gerundeten Eckbereichen ausgebildet sind.

## Claims

1. Electromagnetic valve having a valve housing (2), having at least one valve opening (29) with a valve seat (8), and having a magnetic circuit with an electric drive coil (3) and a magnetic yoke (11) with a longitudinal centre axis (14), and having a metallic plate armature (5) which interacts with the yoke (11) and has an armature disc (48) which is mounted movably in relation to the yoke (11), wherein the armature disc (48) lies sealingly with a sealing surface (9) against the valve seat (8) in a first switching position of the valve and opens up the valve seat (8) in a second switching position of the valve, wherein the valve seat (8) is formed on a valve component (18), and the valve component (18) has at least the one valve opening (29), and the valve opening (29) lies at a radial distance (r) from the longitudinal centre axis (14), and in that the valve seat (8) of the valve opening (29), which valve seat corresponds with direct body contact with the sealing surface of the armature disc (48) of the plate armature (5), is composed of metal,
**characterized**
**in that** the valve component (18) is designed substantially in the shape of a circular disc in the form of an annular element (10), has a central opening (24) formed concentrically with respect to the longitudinal centre axis (14), and contains at least one valve opening (29) surrounding a valve seat (8), and in that the valve component (18) is arranged on the side of the yoke (11) facing away from a base portion (23), wherein a first end face (12) of the ring element (10) lies facing the yoke (11).

2. Electromagnetic valve according to Claim 1,
**characterized in that** the valve seat (8) is designed as a raised edge (20) of the valve opening (29), said raised edge being formed on the annular element (10).

3. Electromagnetic valve according to Claim 1,
**characterized in that** the valve component (18) is designed as a frame element (100), wherein the frame element (100) has at least one spectacles-shaped metal frame which encloses the valve opening (29) and forms the valve seat (8).

4. Electromagnetic valve according to Claim 1,
**characterized in that** the magnetic yoke (11) consists of an outer core (7) and an inner core (4), wherein the outer core is designed as an outer cylinder, wherein a cylinder wall of the outer cylinder has an inner diameter circle (J1), and the valve opening (29) lies on the diameter circle (J1).

5. Electromagnetic valve according to Claim 1,
**characterized in that** the valve component (18) is attached to the yoke (11) with a form fit.

6. Electromagnetic valve according to Claim 1,
**characterized in that** the magnetic yoke (11) consists of an outer core (7) and an inner core (4), **in that** the valve component (18) is arranged in the annular space between the inner core (4) and a cylinder wall of the outer core (7), wherein the valve component (18) engages in at least one cutout (64) of the outer core (7).

7. Electromagnetic valve according to Claim 6,
**characterized in that** the valve component (18) is held rotationally fixedly with a form fit in the cutout (64) of the cylinder wall of the outer core (7).

8. Electromagnetic valve according to Claim 6,
**characterized in that** the valve opening (29) lies locally in the cutout (64) of a cylinder wall of the outer core (7).

9. Electromagnetic valve according to Claim 1,
**characterized in that** the valve component (18) is an insert part, and the insert part is cast into the material of the valve housing (2).

10. Electromagnetic valve according to Claim 1,
**characterized in that** the valve component (18) is embedded tightly with a form fit in a plastic (23).

11. Electromagnetic valve according to Claim 1,
**characterized in that** the valve component (18) together with the valve seat (8) is composed of a magnetizable metal.

12. Electromagnetic valve according to Claim 1,
**characterized in that** the valve component (18) has more than one valve seat (8) and the valve seats (8) are arranged at a distance from one another in the circumferential direction about the longitudinal centre axis (14).

13. Electromagnetic valve according to Claim 12,
**characterized in that** the plurality of valve seats (8) are arranged in a common plane (80).

14. Electromagnetic valve according to Claim 1,
**characterized in that** the valve opening (29) and the valve seat (8) are rectangular with rounded corner regions.

## Revendications

1. Vanne électromagnétique ayant un boîtier de vanne (2), avec au moins un orifice de vanne (29) avec un siège de vanne (3), et ayant un circuit magnétique avec une bobine d'entraînement électrique (3) et une culasse magnétique (11) ayant un axe central longitudinal (14), et avec une armature métallique en plaque (5) coopérant avec la culasse (11), ayant un disque d'armature (48), qui est monté de manière mobile par rapport à la culasse (11), le disque d'armature (48) étant, dans une première position de commutation de la vanne, en contact étanche avec le siège de vanne (8) par une surface d'étanchéité (9) et, dans une deuxième position de commutation de la vanne, libérant le siège de vanne (8), le siège de vanne (8) étant réalisé sur un composant de vanne (18), et le composant de vanne (18) présentant l'au moins un orifice de vanne (29), et l'orifice de vanne (29) étant situé à une distance radiale (r) de l'axe central longitudinal (14), et en ce que le siège de vanne (8) de l'orifice de vanne (29) correspondant à la surface d'étanchéité du disque d'armature (48) de l'armature en plaque (5) avec un contact corporel direct est constitué de métal,
**caractérisée**
**en ce que** le composant de vanne (18) est réalisé sous forme d'élément annulaire (10) sensiblement en forme de disque circulaire, présente une ouverture centrale (24) réalisée concentriquement à l'axe central longitudinal (14), et contient au moins un orifice de vanne (29) entouré par un siège de vanne (8), et **en ce que** le composant de vanne (18) est agencé sur le côté de la culasse (11) opposé à une partie de fond (23), une première face frontale (12) de l'élément annulaire (10) étant tournée vers la culasse (11).

2. Vanne électromagnétique selon la revendication 1,
**caractérisée en ce que** le siège de vanne (8) est réalisé sous la forme d'un bord surélevé (20) de l'orifice de vanne (29), formé sur l'élément annulaire (10).

3. Vanne électromagnétique selon la revendication 1,
**caractérisée en ce que** le composant de vanne (18) est réalisé sous forme d'élément de châssis (100), l'élément de châssis (100) présentant au moins une lunette métallique entourant l'orifice de vanne (29) et formant le siège de vanne (8).

4. Vanne électromagnétique selon la revendication 1,
**caractérisée en ce que** la culasse magnétique (11) est constituée d'un noyau extérieur (7) et d'un noyau intérieur (4), le noyau extérieur étant réalisé sous la forme d'un cylindre extérieur, une paroi de cylindre du cylindre extérieur présentant un cercle de diamètre intérieur (J1), et l'orifice de vanne (29) étant situé sur le cercle de diamètre (J1).

5. Vanne électromagnétique selon la revendication 1,
**caractérisée en ce que** le composant de vanne (18) est relié à la culasse (11) par complémentarité de forme.

6. Vanne électromagnétique selon la revendication 1,
**caractérisée en ce que** la culasse magnétique (11) est constituée d'un noyau extérieur (7) et d'un noyau intérieur (4), **en ce que** le composant de vanne (18) est agencé dans l'espace annulaire entre le noyau intérieur (4) et une paroi cylindrique du noyau extérieur (7), le composant de vanne (18) s'engageant dans au moins un évidement (64) du noyau extérieur (7).

7. Vanne électromagnétique selon la revendication 6,
**caractérisée en ce que** le composant de vanne (18) est maintenu en rotation dans l'évidement (64) de la paroi cylindrique du noyau extérieur (7) par complémentarité de forme.

8. Vanne électromagnétique selon la revendication 6,
**caractérisée en ce que** l'orifice de vanne (29) se trouve localement dans l'évidement (64) d'une paroi cylindrique du noyau extérieur (7).

9. Vanne électromagnétique selon la revendication 1,
**caractérisée en ce que** le composant de vanne (18) est une pièce d'insertion, et la pièce d'insertion est moulée dans le matériau du corps de vanne (2).

10. Vanne électromagnétique selon la revendication 1,
**caractérisée en ce que** le composant de vanne (18) est noyé de manière étanche par complémentarité de forme dans une matière plastique (23).

11. Vanne électromagnétique selon la revendication 1,
**caractérisée en ce que** le composant de vanne (18) ayant le siège de vanne (8) est constitué d'un métal magnétisable.

12. Vanne électromagnétique selon la revendication 1,
**caractérisée en ce que** le composant de vanne (18) présente plus d'un siège de vanne (8) et **en ce que** les sièges de vanne (8) sont agencés à distance les uns des autres dans la direction circonférentielle autour de l'axe central longitudinal (14).

13. Vanne électromagnétique selon la revendication 12,
**caractérisée en ce que** les plusieurs sièges de vanne (8) sont agencés dans un plan commun (80).

14. Vanne électromagnétique selon la revendication 1,
**caractérisée en ce que** l'orifice de vanne (29) et le siège de vanne (8) sont de forme rectangulaire avec des zones de coin arrondies.
